# EUROPEAN PATENT APPLICATION

(11) **EP 2 602 284 A1**
(43) Date of publication of application: **12.06.2013**
(21) Application number: 11192150.8
(22) Date of filing: 06.12.2011
(51) Int. Cl.: C08J 5/24, C08L 67/02

(54) **Multi-component resin system**

(71) Applicant: DSM IP Assets B.V., 6411 TE Heerlen (NL)
(72) Inventor: Hensen, Guido, 6100 AA Echt (NL); Steeman, Paulus Antonius Maria, 6100 AA Echt (NL); Jansen, Johan Franz Gradus Antonius, 6100 AA Echt (NL); Keestra, Beert Jacobus, 6100 AA Echt (NL); Melick van, Harold Geert Hendrik, 6100 AA Echt (NL); Linsen, Jozef Maria Herman, 6100 AA Echt (NL)
(74) Representative: Verhaegen, Ilse Maria M.

(57) **Abstract**

The invention relates to a multi-component resin system comprising (A) a hydroxyl functional unsaturated polyester resin comprising fumaric acid building blocks as unsaturated dicarboxylic acid building blocks and having a hydroxyl value of from 40 up to and including 150, (B) a hydroxyl functional saturated polyester resin comprising cyclohexane dicarboxylic acid building blocks as saturated dicarboxylic acid building blocks and having a hydroxyl value of from 40 up to and including 150, (C) a polyisocyanate that has on average at least 1.75 isocyanate groups, (D) an ethylenically unsaturated compound copolymerizable with (A) and optionally with (B), and (E) a radical initiator, whereby the molar ratio of

## Description

The invention relates to a multi-component resin system comprising a hydroxyl functional unsaturated polyester comprising fumaric acid building blocks as unsaturated dicarboxylic acid building blocks, a polyisocyanate that has on average at least 1.75 isocyanate groups, an ethylenically unsaturated compound copolymerizable with the unsaturated polyester and a radical initiator.

Unsaturated polyester resins especially diluted in styrene are well known in the art. They are used in many applications such as for instance tanks, pipes, boats, relining, chemical anchoring, automotive applications etc.

In order to further improve the mechanical properties of unsaturated polyester resins for the more demanding applications, various hybrid systems have been developed. An example of such a hybrid system is the hybrid of the free radical co-polymerization of an hydroxyl functional polyester with an ethylenically unsaturated compound combined with the isocyanate (NCO)-hydroxyl (OH) polyaddition.

According to L. Valette and C.P.Hsu (Polymer vol 40 p 2059 (1999)) the mechanical properties can be greatly improved by this combination. This improvement in mechanical properties was also mentioned in the introduction part of US 5821296. According to D. Huajun, Z. Lianmeng, W. Jun, Y. Xiaoli, W. Xiang ( Journal of Wuhan University of technology-mater. Sci. Ed P 627, (2009) DOI: 10.1007/s11595-009-4627-2) these improvements in mechanical properties could be due to an increased toughness of the cured hybrid materials. N. Douglass and H. Nava (Composites Research Journal, p 24 (2007)) describe that these hybrid materials are resistant to various environments like water, alkaline and salt water. An example of using such a hybrid system for the resin transfer moulding process is described by A. Maazouz, J. Dupuy, G. Seytre (Polym. Eng. Sci. vol 40 p 690 (2000)).

However, although these hybrid systems can have excellent static mechanical properties which enables them to be used in many applications improvement is still needed for other applications. An example of such an application area which still needs improvement is the windmill blade industry. In this industry there is besides high requirements on the static mechanical properties also a high requirement on the dynamic properties. An example thereof is the dynamic fatigue of a glass filled laminate. As the dynamic fatigue is generally linked to the life time under load conditions, improving the dynamic fatigue of a glass filled laminate will either improve the life time of current windmill blades or enable the construction of even larger blades. As there is no link between the static mechanical properties and the dynamic fatigue, improving the static mechanical properties does not automatically result in improved dynamic mechanical properties. In fact improving the static properties can even result in a decrease in dynamic fatigue.

Consequently, especially for the windmill blade industry which uses glass filed laminates, there is still a need for unsaturated polyester resin compositions which can result in improved dynamic fatigue properties of glass fiber reinforced laminates whilst maintaining the static mechanical properties at a level suitable for construction purposes.

Accordingly, the object of the present invention is to be able to improve the dynamic fatigue of glass fiber reinforced laminates of cured unsaturated polyester resin compositions whilst maintaining other mechanical properties at a level sufficient to be suitable for composite applications.

This object has surprisingly been achieved in that the multi-component resin system comprises (A) a hydroxyl functional unsaturated polyester resin comprising fumaric acid building blocks as unsaturated dicarboxylic acid building blocks and having a hydroxyl value of from 40 up to and including 150, (B) a hydroxyl functional saturated polyester resin comprising cyclohexane dicarboxylic acid building blocks as saturated dicarboxylic acid building blocks and having a hydroxyl value of from 40 up to and including 150, (C) a polyisocyanate that has on average at least 1.75 isocyanate groups, (D) an ethylenically unsaturated compound copolymerizable with (A) and optionally with (B), and (E) a radical initiator, whereby the molar ratio of [NCO]/[OH] in the resin system is from 2:1 up to and including 1:50.

The simple fact that with such a mixture of an unsaturated and a saturated polyester the dynamic fatigue can be improved whilst maintaining other mechanical properties on an acceptable level is very surprising. In general saturated polyesters are added to resin formulations as low profile additives. Although they have a beneficial effect on the surface properties of the cured resin formulation, they have a detrimental effect on the static mechanical properties making them unsuitable for applications that are very demanding on mechanical properties.

Preferably, the molar amount of compound A relative the molar amount of compound B in the multi-component resin system according to the invention is from 10:1 up to and including 1:10; more preferably, from 5:1 up to and including 1:5 and most preferably, from 2:1 up to and including 1:2.

Preferably, the amount of cyclohexane dicarboxylic acid building blocks in (B) is such that the molar amount of cyclohexane dicarboxylic acid building blocks in (B) relative to the total molar amount of saturated dicarboxylic acid building blocks in (B) is from 0.3 up to and including 1, more preferably from 0.5 up to and including 1 and even more preferably 1.

In a preferred embodiment of the invention, compounds A and/or B further comprises alkoxylated bisphenol A or alkoxylated bisphenol F building blocks as diol building blocks. More preferably both compounds A and B comprise alkoxylated bisphenol A or alkoxylated bisphenol F building blocks. Various ethoxylated resp. propoxylated bisphenol A and bisphenol F compounds with various degrees of ethoxylation resp. propoxylation can be used, like for example PO2 (for clarity 1 propylene oxide PO per phenol), EO2, PO3, EO3 ,PO4, EO4, PO5 and PO8. Preferably, the degree of ethoxylation or propoxylation is less than 10. The alkoxylated building blocks are preferably propoxylated bisphenol A or propoxylated bisphenol F building blocks and even more preferably propoxylated bisphenol A building blocks. In a more preferred embodiment of the invention, compounds A and/or B comprises propoxylated bisphenol A or propoxylated bisphenol F building blocks as diol building blocks. More preferably both compounds A and B comprise propoxylated bisphenol A or propoxylated bisphenol F building blocks, even more preferably both compounds A and B comprise propoxylated bisphenol A building blocks.

Preferably, the amount of alkoxylated bisphenol A and alkoxylated bisphenol F in (A) is such that the molar amount of alkoxylated bisphenol A and alkoxylated bisphenol F in (A) relative to the total molar amount of hydroxyl building blocks in (A) is from 0.3 up to and including 1, more preferably from 0.5 up to and including 1 and even more preferably 1. Preferably, the amount of alkoxylated bisphenol A and alkoxylated bisphenol F in (B) is such that the molar amount of alkoxylated bisphenol A and alkoxylated bisphenol F in (B) relative to the total molar amount of hydroxyl building blocks in (B) is from 0.3 up to and including 1, more preferably from 0.5 up to and including 1 and even more preferably 1.

Preferably, the hydroxyl functional unsaturated polyester resin comprising fumaric acid building blocks as unsaturated dicarboxylic acid building blocks has an acid value lower than 4, more preferably lower than 2, most preferably lower than 1.

As used herein, the acid value of hydroxyl functional unsaturated polyester resin comprising fumaric acid building blocks as unsaturated dicarboxylic acid building blocks and hydroxyl building blocks is determined titrimetrically according to ISO 2114-2000.

Preferably the hydroxyl value of hydroxyl functional unsaturated polyester resin comprising fumaric acid building blocks as unsaturated dicarboxylic acid building blocks is higher than 50, more preferably higher than 60. Preferably the hydroxyl value is lower than 125, more preferably lower than 100. The hydroxyl value (OHV) (mg KOH/g of polyester) of the polyester is measured using ISO 4629-1978.

The hydroxyl functional unsaturated polyester resin comprising fumaric acid building blocks as unsaturated dicarboxylic acid building blocks preferably has a molecular weight of at least 800 Dalton, more preferably of at least 900 Dalton and even more preferably of at least 1000 Dalton. The compound(s) (D) capable of undergoing radical copolymerization preferably has a molecular weight of at most 10.000 Dalton and more preferably at most 5000 Dalton

The ethylenically unsaturated compound copolymerizable with (A) and optionally with (B) can be any ethylenically unsaturated compound as long as it can copolymerize with A and are generally regarded as being reactive diluents and are used for both reactivity as well as viscosity reasons.

Preferably the hydroxyl functional unsaturated polyester resin comprising fumaric acid building blocks as unsaturated dicarboxylic acid building blocks (A) is diluted in an ethylenically unsaturated compound copolymerizable with (A) which is also called a reactive diluent. Examples of suitable reactive diluents are, for instance, alkenyl aromatic monomer, such as for example styrene and divinylbenzene vinyl toluene, t-butyl styrene , dialkyl itaconates, (meth)acrylates, vinyl ethers and vinyl amides but all other reactive monomers for use in the field of thermosetting resins as are known to the person skilled in the art can be used. Non-limited examples of reactive diluents are styrene, alpha-methyl styrene, chlorostyrene, vinyl toluene, divinyl benzene, methyl methacrylate, n-butyl methacrylate, cyclohexylmethacrylate, tert.butyl styrene, tert.butylacrylate, butanediol dimethacrylate, 2-hydroxypropyl methacrylate, 2-hydroxyethyl methacrylate, acetoacetoxyethyl methacrylate, PEG200 di(meth)acrylate, 1,4-butanediol di(meth)acrylate, 1,3-butanediol di(meth)acrylate, 2,3-butanedioldi(meth)acrylate, 1,6-hexanediol di(meth)acrylate and its isomers, diethyleneglycol di(meth)acrylate, triethyleneglycol di(meth)acrylate, glycerol di(meth)acrylate, trimethylolpropane di(meth)acrylate, neopentyl glycol di(meth)acrylate, dipropyleneglycol di(meth)acrylate, tripropyleneglycol di(meth)acrylate, PPG250 di(meth)acrylate, tricyclodecane dimethylol di(meth)acrylate, 1,10-decanediol di(meth)acrylate, tetraethylene glycol di(meth)acrylate and trimethylolpropanetri(meth)acrylate, dimethyl itaconate, diethyl itaconate, dibutyl itaconate and mixtures thereof. Preferably the ethylenically unsaturated compound copolymerizable with (A) is selected from the group of styrene, substituted styrene, dialkyl itaconates and methacrylates.

Preferably the amount of ethylenically unsaturated compound copolymerizable with (A) is between 10 and 90 wt.% more preferably between 15 and 80 wt.% and even more preferably between 20 and 70 wt % based on the total amount of (A) and (D).

Preferably the amount of hydroxyl functional unsaturated polyester (A) is between 10 and 90 wt.% more preferably between 20 and 85 wt.%, and even more preferably between 30 and 80 wt.% based on the total amount of (A) and (D).

The compound C is a polyisocyanate compound with an average functionality of at least 1.75, preferably with an average functionality ≥ 2. Non-limiting examples of aromatic and/or aliphatic di isocyanates (f=2) are toluene diisocyanate (TDI), 4,4'-methylene diphenyl diisocyanate (MDI), hexanediisocyanate (HDI), isopherone diisocyanate (IPDI). Non-limiting examples of aromatic and/or aliphatic triisocyanates (f=3) are TDI trimers, HDI trimers, and polymeric MDI (pMDI) . Mixtures of the above mentioned isocyanates can be used as well. Preferred aromatic and/or aliphatic di and/or tri- isocyanates are toluene diisocyanate (TDI), 4,4'-methylene diphenyl diisocyanate (MDI), hexanediisocyanate (HDI), isopherone diisocyanate (IPDI) TDI trimers, HDI trimers, and polymeric MDI (pMDI), especially MDI and polymeric MDI are preferred. In a preferred embodiment of the invention, the isocyanate compound with an average functionality of at least 1.75 comprises aromatic and/or aliphatic diisocyanates.

Preferably, the molar ratio of hydroxyl functionalities of hydroxyl functional unsaturated polyester to isocyanate functionalities in the multi-component resin system is between 50:1 and 1: 2, more preferably between 10:1 and 1: 1.5 and most preferably between 5:1 and 1: 1.1

The radical initiator in the multi-component system according to the invention can be any radical initiatior or initiation system, such as for example azo compounds, photo-initiators and peroxide comprising systems. Preferably the radical initiating system comprises a peroxide in which embodiment the radical initiator is a peroxide.

The peroxide can in principle be any peroxide and the type will depend on for instance the temperature of cure. At high temperatures the thermal decomposition of the peroxide in the initiating system can be sufficient for an efficient cure depending on the peroxide decomposition temperature. At lower temperatures generally the peroxide is used in combination with a peroxide decomposition accelerator. Also the accelerator depends on the type of peroxide used and can be any peroxide decomposition accelerator known to the man skilled in the art. Suitable examples are for instance transition metal salts, complexes and cocktails of these salt or complexes with various ligands such as for instance based on cobalt, copper, iron and manganese. In case peranhydrides are used, the peroxide decomposition accelerators are often selected from the group of tertiary aromatic amines.

Preferably the peroxide is selected from the group of peresters, perketals, percarbonates, hydroperoxides and peranhydrides.

The amount of peroxide can be varied within wide ranges, in general less than 20 wt.%, and preferably less than 10 wt.% (relative to the total amount of (A) and (D)).

As used herein, multi-component resin systems means that the different compounds of the system are present in at least three spatially separated components in order to prevent premature polymerization of the compounds prior to the use of the multicomponent resin system to obtain the hybrid cured resin network. The multicomponent resin system according to the invention comprises at least three components. In one embodiment, the multicomponent resin system comprises at least three components, whereby a first component consists of a resin composition comprising the hydroxyl functional unsaturated polyester (A), the hydroxyl functional saturated polyester (B) and the ethylenically unsaturated compound (D); a second component B consists of a composition comprising the radical initiator (E) and a third component comprises the polyisocyanate (C). The use of the three component resin system according to the invention requires mixing of the three components to obtain a hybrid cured resin network.

The multi-component resin system may further comprise a radical inhibitor which retards the peroxide initiated radical copolymerization of the unsaturated polyester resin with the reactive diluent. These radical inhibitors are preferably chosen from the group of phenolic compounds, hydroquinones, catechols, benzoquinones stable radicals and/or phenothiazines. The amount of radical inhibitor that can be added may vary within rather wide ranges, and may be chosen as a first indication of the pot-life as is desired to be achieved.

Suitable examples of radical inhibitors that can be used in the resin compositions according to the invention are, for instance, 2-methoxyphenol, 4-methoxyphenol, 2,6-di-t-butyl-4-methylphenol, 2,6-di-t-butylphenol, 2,4,6-trimethyl-phenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone , 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine, 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL), galvinoxyl, aluminium-N-nitrosophenyl hydroxylamine, diethylhydroxylamine, phenothiazine and/or derivatives or combinations of any of these compounds.

Compounds A and B can be prepared separately but it is also possible to prepare such mixtures via a one pot synthesis procedure. According to a preferred embodiment, compounds (A) and (B) have been prepared simultaneously by mixing two equivalents of diol with 0.25 to 0.75, preferably 0.5, equivalent of fumaric acid and with 0.75 to 0.25, preferably 0.5, equivalent of cyclohexane dicarboxylic acid.

The invention further relates to systems comprising fibrous reinforcement. The fibrous reinforcement can be any type of fibers, preferably glass or carbon fibers are used. The amount of fibrous reinforcement is preferably from 5 to 90 wt.%, more preferably from 5 to 50 wt.% (relative to the total amount of (A) and (D)).

Besides fibers also other materials can be present in the resin system according to the invention like for instance pigments, fillers, low profile additives etc

According to another embodiment of the invention, the multi-component resin system further comprises (F) a rubber which (i) is soluble in the mixture of (A), (B) and (D), (ii) contains functional groups of which at least a part are, upon curing of the composition, able to react with at least (A), (B), (C) and/or (D) and (iii) is, upon curing of the composition, phase separated from the cured composition. In the context of the invention soluble means a solubility higher then 0.1 g per 100g mixture of A, B and D. Phase separation upon cure can be easily detected visually as phase separation results in an opaque cured composition. In case due to fillers, fibers, pigments etc the resins formulation is not transparent, phase separation can be detected as 2 distinct glass transition temperatures (Tg) will appears in the DMTA of the cured material.

Preferably, the amount of rubber is between 1 and 30 wt.% (relative to the total amount of (A) and (D)). Preferably the amount of rubber is less than 25 wt.%, more preferably less than 20 wt.% and even more preferably less than 15 wt.%. Preferably the amount of rubber is more than 2 wt. %, more preferably more than 3 wt.%.

The invention further relates to a resin composition comprising (A) a hydroxyl functional unsaturated polyester resin comprising fumaric acid building block with a hydroxyl value of from 40 up to and including 150, (B) a hydroxyl functional saturated polyester resin comprising cyclohexane dicarboxylic acid building blocks as saturated dicarboxylic acid building blocks and having a hydroxyl value of from 40 up to and including 150 and (D) an ethylenically unsaturated compound copolymerizable with (A).

The present invention further relates to a process for curing a resin composition comprising (A) a hydroxyl functional unsaturated polyester resin comprising fumaric acid building block with a hydroxyl value of from 40 up to and including 150, (B) a hydroxyl functional saturated polyester resin comprising cyclohexane dicarboxylic acid building blocks as saturated dicarboxylic acid building blocks and having a hydroxyl value of from 40 up to and including 150 and (D) an ethylenically unsaturated compound copolymerizable with (A), with a peroxide and an isocyanate, wherein the curing is performed by mixing the components from the multi-component system as described above. Preferably, the curing is effected at a temperature in the range of from -20 to +200 °C, preferably in the range of from -20 to +150 °C, and most preferably in the range of from -10 to +80 °C.

According to a preferred embodiment, the process for curing a resin composition comprising (A) a hydroxyl functional unsaturated polyester resin comprising fumaric acid building block with a hydroxyl value of from 40 up to and including 150, (B) a hydroxyl functional saturated polyester resin comprising cyclohexane dicarboxylic acid building blocks as saturated dicarboxylic acid building blocks and having a hydroxyl value of from 40 up to and including 150 and (D) an ethylenically unsaturated compound copolymerizable with (A), with a peroxide and an isocyanate is by preparing a resin composition comprising an unsaturated polyester resin, a saturated polyester resin and an ethylenically unsaturated compound copolymerizable with (A) according to the invention, and by mixing the isocyanate and a peroxide to the so obtained resin composition.

Besides the windmill blade industry, the multi component resin systems according to the invention can also advantageously be applied in for example tanks, pipes, boats, relining, chemical anchoring, automotive applications, roofing, flooring, boats. The invention also relates to the cured objects or structural parts obtained by mixing the components from the multi-component system according to the invention.

The present invention further relates to a process for the preparation of fiber reinforced composite articles comprising mixing the components of the multi-component system as described above; impregnating fibers with this mixture and allowing the mixture to cure. According to a preferred embodiment, the process of fiber impregnation is performed via vacuum infusion. As fibers both organic as well as inorganic fibers can be used. Prefered inorganic fibers are glass fibers and carbon fibers. The invention further relates to method for increasing the dynamic fatigue of a fibre-reinforced composite article prepared by mixing the components of a multi-component system to obtain a mixture, impregnating fibres with said mixture and allowing the mixture to cure; wherein the multi-component system is as described above.

The invention is now demonstrated by means of a series of examples and comparative examples. All examples are supportive of the scope of claims. The invention, however, is not restricted to the specific embodiments as shown in the examples.

### EXPERIMENTAL

Tensile tests were performed according to ISO 527-2.

K1 c tests were performed using a Zwick Z010-I according to ISO 17281.

Dynamic Fatigue was tested using A Zwick Rell 100KN fatigue tester

Force controlled tensile fatigue tests were performed using A Zwick Rell 100kN fatigue tester equipped with a 100kN load cell using 50kN grips. Tests were performed at ambient temperature. The frequency of the sinusoidal fatigue cycles was 5Hz. The applied ratio (R) between min. fatigue load and max. fatigue load is R=0.1 (tensile-tensile fatigue).

The sample thickness is about 4.5mm. The geometry of the samples is curved (dogbone shaped). Total radius of the curve is 362.5mm. The width of the sample at the small part in the centre is 10mm and the width at the gripping part is 20mm. The total sample length is 240mm. The length of the clamping part on each side is 60mm. Aluminium end tabs L*W*T=60*20*2mm were glued on the clamping parts for optimal gripping. The mid sample length in between the tabs is ±120mm. The grip-to-grip distance at the tests is 130mm.

Prior to the fatigue tests the samples are loaded up to 0.30% strain to measure the tensile modulus, necessary to determine the fatigue loads at the requested strain-range. Strain was measured by using a MultiXtense Extensometer with L₀ = 50mm.

Force controlled tensile fatigue tests till break with a frequency of 5Hz at 25°C were performed. The number of fatigue cycles up to fracture of the samples was measured.

Dynamic Mechanical Analysis was performed according to ASTM D5026 using a Rheometrics RSA-III employing a 1Hz frequency over a temperature range from -130°C-250°C with a heating ramp of 5°C/min using 0.2 mm thick samples

### Laminates and neat resin casting

Laminates were prepared using vacuum infusion. Employed glass fiber package consisted of 4 layers of Combi 1250 E-glass (Devold: L 1200/G50F-E07-A), which were stacked in mirror image (UD facing to the middle). This package is covered on both sides with one layer Biax 806 +/-45° E-glass (DB 810-E05-A). On top of the glass fiber package peel-ply and a bleeder foil are employed to facilitate demoulding and resin transport. Infusion was performed along the fiber direction. Initial applied vacuum was 90%, which was reduced to 60 % (400 mbar) once the pack was filled and maintained at this vacuum for 25 min before the inlet was closed and the laminate was allowed to cure. After curing overnight at room temperature the laminates were post-cured for 15 hrs at 80°C. The resulting laminates had a glass content around 72 wt%.

4 mm thick neat resin castings were prepared by casting the resin formulations between two hardened borosilicate glass plates that are separated by a U-shaped 4mm EPDM rubber. After curing overnight at room temperature, the castings were post-cured 15 hrs at 80°C.

### Resin 1

866,5 g of tetrapropoxylated bisphenol A (BPA(PO)4), 83.9 g of 1,4-cyclohexane dicarboxylic acid (CHDA), 56.5 g of fumaric acid (FA) and 0.134 g of tempol were charged in a vessel equipped with a stirrer, reflux condenser, a temperature measurement device and inert gas inlet. The mixture was heated to 210°C. At 210°C the mixture was kept under reduced pressure until the acid value reached a value below 5mg KOH/g resin. After relieving the vacuum with inert gas the mixture was cooled to 200°C followed by the addition of 1.51 g of triphenyl ethylphosphonium bromide and 20g of propylenecarbonate and kept at 200°C until acid value was below 1.5 mg KOH/g resin. Next vacuum was applied for 1 hr and the reaction mixture was cooled down to 90°C. The reaction mixture was added to a mixture of 328.43 g styrene and 0.134 g tempol maintaining the temperature below 80°C yielding resin 1 with a viscosity at 23°C of 684 mPa*s, an acid value of 1.2 mg KOH/g resin and a solid content of 74wt%.

### Comparitive resin A

866,5 g of tetrapropoxylated bisphenol A (BPA(PO)4), 113.1 g of fumaric acid (FA) and 0.131 g of tempol were charged in a vessel equipped with a stirrer, reflux condenser, a temperature measurement device and inert gas inlet. The mixture was heated to 210°C. At 210°C the mixture was kept under reduced pressure until the acid value reached a value below 5mg KOH/g resin. After relieving the vacuum with inert gas the mixture was cooled to 200°C followed by the addition of 1.51 g of triphenyl ethylphosphonium bromide and 20g of propylenecarbonate and kept at 200°C until acid value was below 1.5 mg KOH/g resin. Next vacuum was applied for 1 hr and the reaction mixture was cooled down to 90°C. The reaction mixture was added to a mixture of 328.43 g styrene and 0.196 g tempol maintaining the temperature below 80°C yielding resin A with a viscosity at 23°C of 684 mPa*s, an acid value of 0.7 mg KOH/g resin and a solid content of 74wt%.

### Example 1 and comparative experiment A

### Example 1

400 g of resin 1, 60.0 g of styrene, 4.88 g of N,N-dimethyl-1-naphthylamine and 0.53 g of BYK A-555 were added to a beaker and homogenized with a stirrer. To this mixture 70.8 g of polymeric methylene diphenyldiisocyanate (pMDI) and 9.2 g of Perkadox CH-50L (Akzo Nobel) were added. This mixture was again homogenized and subsequently degassed to eliminate entrapped air.

### Comparative experiment A

400 g of resin A, 60.0 g of styrene, 4.88 g of N,N-dimethyl-1-naphthylamine and 0.53 g of BYK A-555 were added to a beaker and homogenized with a stirrer. To this mixture 73.7 g of polymeric methylene diphenyldiisocyanate (pMDI) and 9.2 g of Perkadox CH-50L was added. This mixture was again homogenized and subsequently degassed to eliminate entrapped air.

Castings and laminates were prepared of these resin formulations and the mechanical results are shown in table 1

**Table 1**

| | Example 1 | Comparative A |
|---|---|---|
| Castings | | |
| Tensile E' (MPa) | 2940 | 2920 |
| Yieldstress σ max (MPa) | 67.8 | 70.2 |
| ε @ break (%) | 6.7 | 6.7 |
| Tg (E") (°C) | 67 | 84 |
| K1c (MPa*m^{0 5}) | 1.49 | 0.99 |

| Laminates | | |
|---|---|---|
| Fatigue @ strain range 0,72% | | |
| # of cycles to failure | 3.1* 10⁶ | 2.8* 10⁶ |
| Absolute stress (MPa) | 269 | 261 |

The table demonstrates that both cured resin systems have static mechanical properties at a level that make both resin sytems suitable for construction purposes. This table also clearly demonstrates that although the static performance of the formulation according to the invention (example 1) is in fact quite similar compared to the comparison (comparative A) regarding tensile strength, elongation @ break and yield stress, the fatigue properties of the laminate according to the invention is significantly improved as even at a higher stress level the number of cycles to failure is higher.

## Claims

1. Multi-component resin system comprising (A) a hydroxyl functional unsaturated polyester resin comprising fumaric acid building blocks as unsaturated dicarboxylic acid building blocks and having a hydroxyl value of from 40 up to and including 150, (B) a hydroxyl functional saturated polyester resin comprising cyclohexane dicarboxylic acid building blocks as saturated dicarboxylic acid building blocks and having a hydroxyl value of from 40 up to and including 150, (C) a polyisocyanate that has on average at least 1.75 isocyanate groups, (D) an ethylenically unsaturated compound copolymerizable with (A) and optionally with (B), and (E) a radical initiator, whereby the molar ratio of [NCO]/[OH] in the resin system is from 2:1 up to and including 1:50.

2. Multi-component resin system according to claim 1, wherein the molar amount of compound A relative to the molar amount of compound B is from 10:1 up to and including 1:10.

3. Multi-component resin system according to claim 1, wherein the molar amount of compound A relative to the molar amount of compound B is from 2:1 up to and including 1:2.

4. Multi-component resin system according to anyone of claims 1-3, wherein compounds (A) and (B) further comprises alkoxylated bisphenol A or alkoxylated bisphenol F building blocks.

5. Multi-component resin system according to anyone of claims 1-3, wherein compounds (A) and (B) further comprises propoxylated bisphenol A or propoxylated bisphenol F building blocks.

6. Multi-component resin system according to anyone of claims 1-3, wherein compounds (A) and (B) further comprises propoxylated bisphenol A building blocks.

7. Multi-component resin system according to anyone of claims 1-6, wherein compounds (A) and (B) have been prepared simultaneously by mixing two equivalents of diol with 0.25 to 0.75 equivalent of fumaric acid and with 0.75 to 0.25 equivalent of cyclohexane dicarboxylic acid.

8. Multi-component resin system according to anyone of claims 1-8, wherein the resin system further comprises fibrous reinforcement.

9. Multi-component resin system according to anyone of claims 1-8, wherein the resin system further comprises (F) a rubber which (i) is soluble in the mixture of (A), (B) and (D), (ii) contains functional groups of which at least a part are, upon curing of the composition, able to react with at least (A), (B), (C) and/or (D) and (iii) is, upon curing of the composition, phase separated from the cured composition.

10. Cured objects or structural parts obtained from a multi-component system according to any of claims 1-9.

11. Use of the multi component system according to any of claims 1-9, in any one of the areas of chemical anchoring, construction, roofing, flooring, windmill blades, containers, tanks, pipes, automotive parts or boats.

12. Use of the multi component system according to any of claims 1-9 for producing windmill blades.

13. Process for increasing the dynamic fatigue of a fiber-reinforced composite article prepared by mixing the components of a multi-component system according to anyone of claims 1-10 to obtain a mixture, impregnating fibers with said mixture and allowing the mixture to cure.

14. Process according to claim 13 in which the impregnation is performed via vacuum infusion.
